## Europäisches Patentamt

## European Patent Office

## Office européen des brevets

(19)

(11) Numéro de publication: **0 214 021**
**B1**

(12)

# FASCICULE DE BREVET EUROPEEN

(45) Date de publication du fascicule du brevet:
**18.10.89**

(51) Int. Cl.⁴: **F 16 D  25/12,** F 16 D  67/04

(21) Numéro de dépôt: **86401730.6**

(22) Date de dépôt: **01.08.86**

(54) **Embrayage à commande hydraulique.**

(30) Priorité: **02.08.85  FR 8511850**

(43) Date de publication de la demande:
**11.03.87 Bulletin 87/11**

(45) Mention de la délivrance du brevet:
**18.10.89 Bulletin 89/42**

(84) Etats contractants désignés:
**DE FR GB IT**

(56) Documents cités:
**EP-A- 0 106 594**
**FR-A- 2 403 487**
**GB-A- 789 285**
**US-A- 3 463 283**
**US-A- 4 321 990**

(73) Titulaire: **VALEO, 64 Avenue de la Grande Armée,
F-75017 Paris (FR)**

(72) Inventeur: **Marchisio, Aldo, Strada Cigala 14/7,
Moncalieri (Torino) (IT)**
Inventeur: **Scotti, Alessandro, Corso Vittorio Emanuel II
No. 20, Turin (IT)**

(74) Mandataire: **CABINET BONNET-THIRION, 95 Boulevard
Beaumarchais, F-75003 Paris (FR)**

## Description

La présente invention concerne d'une manière générale les embrayages, et en particulier les embrayages multidisques, dont la commande est hydraulique.

Ainsi qu'on le sait, un tel embrayage à commande hydraulique comporte, globalement, deux parties coaxiales, l'une, qui forme par exemple une partie menante, équipée annulairement d'un ou plusieurs disques de friction échelonnés axialement, l'autre, qui, formant alors une partie menée, comprend deux pièces en relation de cylindre-piston l'une par rapport à l'autre, lesdites pièces formant entre elles, d'un premier côté axial du ou des disques de friction, une chambre de pression de volume variable susceptible d'être alimentée en fluide sous pression.

Lorsque du fluide sous pression est effectivement envoyé dans cette chambre de pression, la pièce formant piston vient agir axialement sur le ou les disques de friction, pour serrage axial de ceux-ci entre elle et un flasque de réaction calé axialement sur la pièce formant cylindre du côté axial de ce ou ces disques de friction opposé au précédent.

Les deux parties coaxiales concernées étant ainsi solidarisées en rotation l'une à l'autre, l'embrayage est engagé.

Lorsque la pression dans la chambre de pression est relâchée, des moyens élastiques prévus à cet effet assurent un mouvement axial rétrograde de la pièce formant piston, et, le ou les disques de friction étant ainsi desserrés, l'embrayage se trouve désengagé.

En pratique, le fluide sous pression mis en oeuvre se trouve conjointement desservir un circuit de lubrification et/ou refroidissement, dont bénéficient, en particulier, pour leur refroidissement, le ou les disques de friction.

Les embrayages à commande hydraulique de ce type trouvent notamment leur application pour la commande d'une prise de force sur les tracteurs, ladite prise de force étant alors calée sur leur partie menée.

L'un des problèmes à résoudre dans leur réalisation résulte de ce que le fluide présent dans leur circuit de lubrification et/ou refroidissement peut induire, par effet de traînée, une rotation intempestive de cette partie menée alors même que celle-ci est normalement en position de désengagement vis-à-vis de la partie menante à laquelle elle est associée, ce qui peut rendre difficile et dangereux l'engagement, sur la prise de force concernée, d'un quelconque organe ou outil à commander en rotation par celle-ci, et/ou provoquer, sans qu'elle soit encore désirée, la rotation de cet organe ou outil.

Pour pallier cette difficulté, il a déjà été proposé d'associer à la partie menée de l'embrayage un frein, communément dit frein de traînée, propre à agir sur cette partie menée lorsque celle-ci est ainsi en position de désengagement.

Pour tirer parti de la présence du fluide sous pression nécessaire par ailleurs à la commande de l'embrayage aussi bien qu'à la desserte de son circuit de lubrification et/ou refroidissement, il est usuel d'utiliser également ce fluide sous pression pour la commande du frein de traînée.

Le plus souvent, à ce jour, la commande hydraulique correspondante comporte, dans un corps creux, pour la desserte de l'une ou l'autre des deux chambres de pression à volume variable nécessaires, celle propre à l'engagement de l'embrayage, et celle propre à la commande du frein de traînée, une arrivée de fluide, qui est propre à être raccordée à une source de fluide sous pression, et, interposée entre ladite arrivée de fluide et l'une et l'autre desdites chambres de pression, une valve, qui, dite ci-après par simple commodité valve de sélection, est sous le contrôle d'une commande à la disposition de l'usager.

Ainsi, lorsque la pression est relâchée dans la chambre de pression de l'embrayage, et que donc l'embrayage est commandé en désengagement, la chambre de pression du frein de traînée peut au contraire se trouver sous pression.

Autrement dit, lorsque l'embrayage est désengagé, son frein de traînée est serré, ce qui assure, comme recherché, l'arrêt en rotation de sa partie menée.

Le plus souvent également, le frein de traînée qui est ainsi mis en oeuvre et qui est donc lui aussi commandé hydrauliquement comporte simplement un piston propre à appliquer un patin de freinage contre une portée, en général cylindrique, solidaire en rotation de la partie menée à contrôler.

Eu égard au couple de traînée à occulter, le couple de frottement développé par un tel frein de traînée, peut, au moins pour certaines applications, s'avérer insuffisant.

Pour surmonter cette difficulté, il a été proposé, notamment dans le brevet français déposé le 16 Septembre 1977 sous le numéro 7 727 970 et publié sous le numéro 2 403 487, de mettre en oeuvre, pour frein de traînée, un frein à bande.

S'agissant du couple de frottement recherché, cette disposition, qui conduit en outre à d'autres avantages, donne largement satisfaction.

Mais elle a pour inconvénient d'être relativement coûteuse.

La présente invention a d'une manière générale pour objet une disposition permettant, elle, de s'affranchir de la mise en oeuvre d'un frein à bande, même lorsque le couple de traînée à contrôler est, sans autre, relativement important.

D'une manière plus précise, elle a pour objet, un embrayage à commande hydraulique du genre dont la commande hydraulique comporte, dans un corps creux, pour la desserte d'au moins une chambre de pression à volume variable propre à l'engagement de l'embrayage, une arrivée de fluide propre à être raccordée à une source de fluide sous pression, en coopération avec un circuit de lubrification et/ou refroidissement également desservi par une arrivée de fluide, cet embrayage étant d'une manière générale caractérisé en ce que, entre le circuit de lubrification et/ou refroidissement et l'arrivée de fluide le desservant est interposée une valve, qui, dite ci-après par simple commodité valve de contrôle, est normalement ouverte, et qui est susceptible d'être soumise en fermeture à une pression liée à la pression d'arrivée du fluide sous pression lorsque l'embrayage est désengagé et en ce que, un frein de traînée commandé par une chambre de pression à volume variable desservie par la même arrivée de fluide que l'embrayage étant prévu, avec, interposée entre ladite arrivée de fluide et l'une et l'autre des chambres de pressions une valve qui, dite ici par simple commodité valve de sélection, est sous le contrôle d'une commande à la disposition de l'usager, ladite valve de contrôle est soumise en fermeture à une pression liée à celle régnant dans la chambre de pression dudit frein de traînée.

Ainsi, suivant l'invention, lorsque l'embrayage étant en position de désengagement, et que, le ou les disques de friction étant ainsi desserrés et donc inactifs, la nécessité de leur refroidissement est moins impérieuse, le circuit de lubrification et/ou refroidissement correspondant est systématiquement mis hors service.

Le couple de traînée dû à ce circuit de lubrification et/ou refroidissement étant dès lors, au moment opportun, réduit, il est avantageusement possible de se satisfaire, pour la constitution du frein de traînée, d'un simple piston propre à appliquer un simple patin de freinage contre la portée concernée de la partie menée à contrôler.

Il en résulte, au moindre prix, une simplification avantageuse et économique de l'ensemble.

Certes, il est connu, par le document US-A-4 321 990, un embrayage à commande hydraulique et frein de traînée, dans lequel un même fluide dessert le circuit de commande et un circuit de lubrification et/ou refroidissement.

Mais si, dans ce document US-A-4 321 990, il est bien prévu un frein de traînée, l'intervention de celui-ci se fait systématiquement lorsque le piston de commande de l'ensemble est en position de désengagement, une pièce portée par celui-ci venant alors en prise, par une surface tronconique, avec une surface tronconique complémentaire prévue à cet effet sur le moyeu de l'arbre mené, en sorte que, à la différence du frein de traînée mis en oeuvre dans l'embrayage faisant l'objet de la présente invention, ce frein de traînée n'est pas commandé par une chambre de pression à volume variable spécifique, et que, a fortiori, il n'est pas prévu, sur l'alimentation de celle-ci, une quelconque valve de sélection.

Il en résulte, notamment, que, à la différence de la présente invention, il n'y a pas la possibilité d'avoir à la fois l'embrayage désengagé et le frein de traînée libre.

Les caractéristiques et avantages de l'invention ressortiront d'ailleurs de la description qui va suivre, à titre d'exemple, en référence aux dessins schématiques annexés sur lesquels:

la figure 1 est un bloc diagramme d'un embrayage suivant l'invention et de sa commande hydraulique, pour une première configuration de celle-ci;

les figures 2, 3 sont des blocs diagrammes analogues à celui de la figure 1, pour deux autres configurations de cette commande hydraulique.

Tel qu'illustré sur ces figures, il s'agit, globalement de la commande hydraulique d'un embrayage 10.

Dans la forme de réalisation représentée, il est associé à cet embrayage 10 un frein de traînée 11 également contrôlé hydrauliquement.

Cet embrayage 10, et ce frein de traînée 11, ne faisant pas partie par eux-mêmes de la présente invention, ils ne seront décrits ici que succinctement.

Globalement, dans la forme de réalisation représentée, l'embrayage 10 comporte un support fixe 12, et, montées rotatives par rapport à celui-ci, deux parties coaxiales A, B, l'une menante, l'autre menée.

La partie menante A comporte elle-même, dans cette forme de réalisation, un moyeu 14, qui, par son alésage interne 15, cannelé à cet effet, est apte à être calé en rotation sur un arbre 16, en pratique un arbre menant, par exemple l'arbre de sortie d'un moteur, et, disposé annulairement autour de ce moyeu 14 en étant calé en rotation sur celui-ci, au moins un disque de friction 17.

En pratique, dans la forme de réalisation représentée, s'agissant d'un embrayage multidisque, plusieurs disques de friction 17 sont échelonnés axialement le long du moyeu 14, avec un montage à cannelures entre eux et celui-ci.

Ces disques de friction 17 sont ainsi calés en rotation sur le moyeu 14 tout en pouvant se déplacer axialement par rapport à lui.

La partie menée B comporte, corollairement, deux pièces 19, 20, qui, en relation de cylindre-piston l'une par rapport à l'autre, forment entre elles, d'un premier côté axial des disques de friction 17, une chambre de pression à volume variable 21, susceptible, par un conduit 22, et suivant des dispositions décrites plus en détail ultérieurement, d'être raccordée à une source de fluide sous pression.

Dans la forme de réalisation représentée, la pièce 19, qui forme cylindre, comporte un moyeu 23, par lequel elle est montée rotative dans un alésage interne 24 du support fixe 12, et, autour des disques de friction 17, raccordée au moyen 23 par une paroi transversale formant fond 25, une jupe 26.

Cette jupe 26, qui se prolonge axialement au-delà des disques de friction 17, présente, longitudinalement, des saignées 27 à la faveur desquelles sont calés en rotation sur elle des plateaux 28 qui alternent axialement avec lesdits disques de friction 17.

Du côté axial de ces disques de friction 17 opposé à la chambre de pression 21 s'étend, transversalement, un flasque de réaction 30, qui, à la faveur des mêmes saignées 27 de la jupe 26 de la pièce formant cylindre 19, se trouve calé en rotation sur celle-ci.

Ce flasque de réaction 30, qui, par un alésage interne 31, cannelé à cet effet, est lui-même susceptible d'être calé en rotation sur un arbre 32, en pratique un arbre mené formant prise de force, est en outre calé axialement, au moins dans un sens, sur ladite jupe 26.

Par exemple, et tel que représenté, une rondelle 33, du type rondelle ouverte radialement par une fente, peut être mise en oeuvre à cet effet, ladite rondelle 33 étant en prise tant avec une gorge 34 de la jupe cylindrique 26 de la pièce formant cylindre 19 qu'avec une gorge 35 du flasque de réaction 30.

Pour éviter que la rondelle 33 ainsi mise en oeuvre puisse se refermer intempestivement sur elle-même, au risque d'une désolidarisation axiale du flasque de réaction 30 vis-à-vis de la pièce formant cylindrique 19, il peut lui être associé un anneau, non clairement visible sur les figures, qui, introduit par exemple tangentiellement à la faveur d'une ouverture prévue à cet effet dans le flasque de réaction 30, comble le vide entre elle et le fond de la gorge 35 de celui-ci.

La pièce 20, qui forme piston, et qui est une pièce annulaire, est engagée à coulissement, de manière sensiblement étanche, entre, d'une part, la jupe 26 de la pièce formant cylindre 19, et d'autre part, un prolongement axial interne 36 du moyeu 23.

Sur sa face opposée à la chambre de pression 21, cette pièce formant piston 20 est soumise à des moyens élastiques de rappel qui la sollicitent en permanence en direction opposée aux disques de friction 17, c'est-à-dire en direction de la paroi transversale 25 correspondante de la pièce formant cylindre 19.

En pratique, dans la forme de réalisation représentée, ces moyens élastiques de rappel sont constitués par un ressort 37 qui prend appui sur une douille 38 elle-même calée axialement sur le prolongement axial interne 36 du moyeu 23.

Le frein de traînée 11, quant à lui, ne comporte, dans la forme de réalisation représentée, et cela est un avantage de l'invention, qu'un simple piston 42, qui est monté coulissant dans un cylindre 43 formé pour lui dans le support fixe 12, en définissant avec le fond de ce cylindre 43 une chambre de pression à volume variable 44 susceptible, par un conduit 45 et suivant des dispositions décrites plus en détail ultérieurement, d'être raccordée à une source de fluide sous pression, et qui est apte à appliquer un simple patin de freinage 46 contre une portée 47, en pratique cylindrique, solidaire axialement de la partie menée B de l'embrayage 10.

Dans la forme de réalisation représentée, cette portée 47 est formée par une portion de la surface extérieure de la jupe 26 de la pièce formant cylindre 19 appartenant à cette partie menée B.

En pratique, une même commande hydraulique 50 pilote l'embrayage 10 et son frein de traînée 11.

Cette commande hydraulique 50 est formée dans un corps creux 51.

Ce corps creux 51, qui n'a été que schématiquement représenté sur les figures et dont la réalisation relève d'ailleurs de l'homme de l'art, peut former une pièce indépendante du support fixe 12 de l'embrayage 10, tel que représenté.

En variante, il peut avantageusement être intégré à ce support fixe 12.

Dans ce dernier cas, les conduits et évidements correspondants sont directement formés dans celui-ci.

Quoi qu'il en soit, la commande hydraulique 50 comporte, dans le corps creux 51, pour la desserte de l'une au moins des deux chambres de pression 21, 44 concernées, et, en pratique, de l'une ou l'autre de celles-ci, une arrivée de fluide 52, propre à être raccordée à une quelconque source de fluide sous pression.

Elle comporte également, interposée entre cette arrivée de fluide 52 et l'une et l'autre des chambres de pression 21, 44, une valve 53, dite ici par simple commodité valve de sélection.

En pratique, dans la forme de réalisation représentée, cette valve de sélection 53, qui est sous le contrôle d'une commande 54, en l'espèce une simple tige, à la disposition d'un usager, est une valve à tiroir.

Son tiroir 55 est monté mobile axialement dans un évidement 56, formant cylindre, du corps creux 51.

Il comporte une pluralité de portées, et principalement deux portées 57, 58, l'une disposée à son extrémité, l'autre disposée dans sa partie médiane.

Dans la forme de réalisation représentée, le tiroir 55 comporte également, entre ces portées 57, 58, une portée intermédiaire 59, mais, celle-ci, qui, axialement, est affectée de saignées, n'ayant pas en pratique de rôle fonctionnel, il n'en sera plus fait mention ici.

Dans l'évidement 56 formant cylindre, débouchent quatre canalisations 60, 61, 62, 63.

La canalisation 60 relie cet évidement formant cylindre 56 à l'arrivée de fluide 52, la canalisation 61 le relie au conduit 22 desservant la chambre de pression 21 de l'embrayage 10, la canalisation 62 le relie au conduit 45 desservant la chambre de pression 44 du frein de traînée 11 et la canalisation 63 le relie à une décharge.

En pratique cette décharge est constituée par un carter, non représenté, dans lequel l'ensemble de l'embrayage 10, de son frein de traînée 11, et de sa commande hydraulique 50 est disposé, ce carter constituant conjointement la source de fluide de pression associée, par reprise, par une pompe également non représentée, du fluide, en l'espèce de l'huile, qui s'y trouve.

En pratique, également, à son extrémité 65 opposée à sa commande 54, l'évidement formant cylindre 56 débouche librement dans ce carter.

Sous le contrôle d'un encliquetage 67 formé, en pratique, dans la forme de réalisation représentée, d'une bille 68 qui, sollicitée par un ressort 69 prenant appui sur une butée 70 solidaire du corps creux 51, est propre à coopérer avec l'une ou l'autre de trois gorges I, II, III du tiroir 55 de la valve de sélection 53, ce tiroir 55 est apte à prendre, de manière stable, mais débrayable, l'une ou l'autre de trois positions axiales bien déterminées.

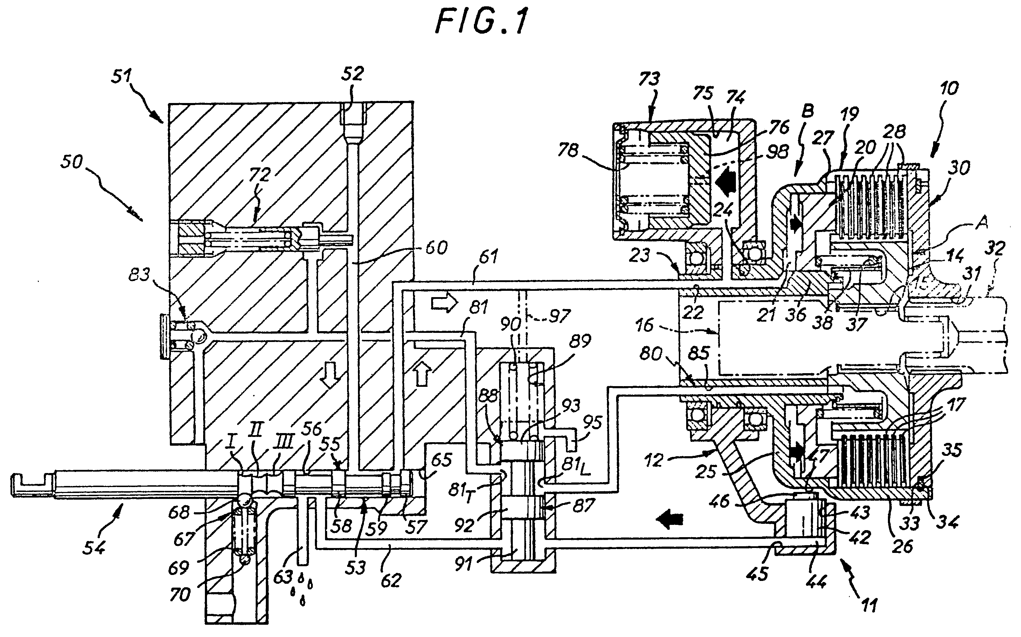

Les dispositions sont telles que, pour la première de ces positions, figure 1, les canalisations 60 et 61 sont en communication l'une avec l'autre, et qu'il en est de même pour les canalisations 62, 63.

Autrement dit, pour cette première position, la chambre de pression 21 de l'embrayage 10 est reliée à l'arrivée de fluide 52, en sorte que, refoulée en direction du flasque de réaction 30, la pièce formant piston 20 serre axialement contre ce dernier l'empilage formé par les disques de friction 17 et les plateaux 28 insérés entre ceux-ci, et que ledit embrayage 10 est donc engagé.

En pratique, dans la forme de réalisation représenté, une valve 72, en prise avec la canalisation 60, assure le réglage à une valeur donnée de la pression régnant alors dans l'ensemble du circuit concerné, et, donc, dans la chambre de pression 21 de l'embrayage 10, cette valeur étant choisie suffisante pour satisfaire au serrage axial à assurer.

La pression ainsi régie par la valve 72 est en toute hypothèse liée à la pression d'arrivée du fluide sous pression, puisqu'elle en est dérivée.

Par ailleurs, dans cette forme de réalisation, il est adjoint à l'embrayage 10 un accumulateur hydraulique 73 dont la cavité interne 74, formée entre un cylindre 75 appartenant au support fixe 12 et un piston 76 monté mobile dans ce cylindre 75 à l'encontre de moyens élastiques de rappel 78, est en prise avec le conduit 22 desservant la chambre de pression 21 de cet embrayage 10.

Grâce à la présence de cet accumulateur hydraulique 73, la montée en pression dans la chambre de pression 21 de l'embrayage 10 se fait suivant une loi déterminée choisie pour conduire à l'obtention d'une bonne progressivité dans le serrage axial à assurer.

Conjointement, du fait que les canalisations 62, 63 sont alors en communication, la chambre de pression 44 du frein de traînée 11 se trouve, elle, à la décharge.

Autrement dit, lorsque l'embrayage 10 est ainsi engagé, le frein de traînée 11 est libre.

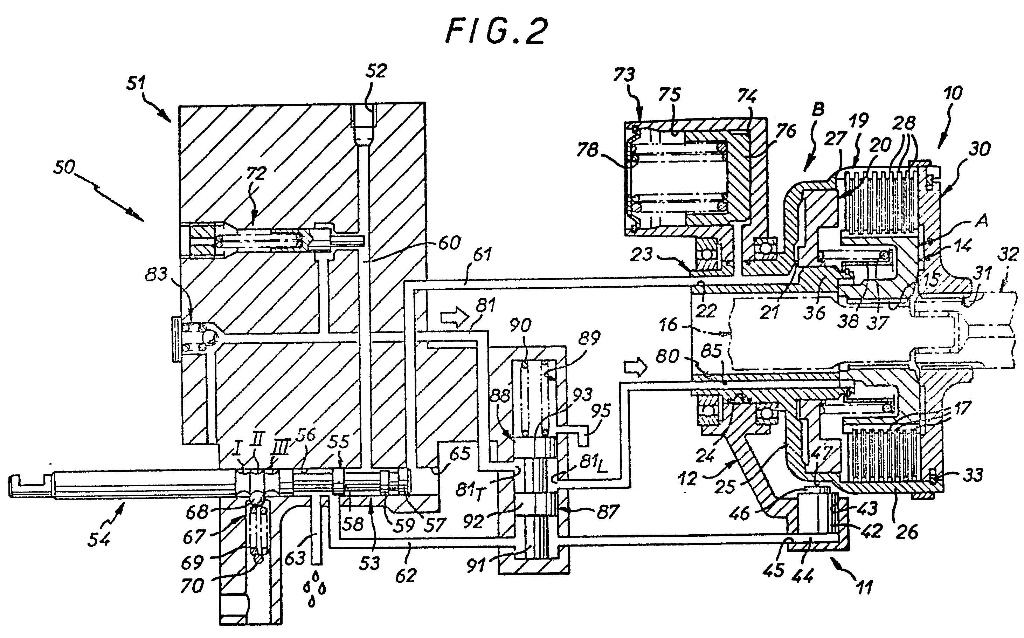

Pour la deuxième position du tiroir 55 de la valve de sélection 53, figure 2, la communication entre les canalisations 60 et 61 se trouve interrompue par la portée d'extrémité 57 de ce tiroir 55, la canalisation 61 se trouvant directement reliée à la décharge par l'extrémité ouverte 65 de l'évidement formant cylindre 56 correspondant.

Il ne règne dès lors plus aucune pression ni dans la chambre de pression 21 de l'embrayage 10, ni dans la cavité interne 74 de l'accumulateur hydraulique 73, et, sous la sollicitation du ressort 37, la pièce formant piston 20 est refoulée en direction de la paroi transversale 25 de la pièce formant cylindre 19, en sorte que, les disques de friction 17 étant desserrés, ledit embrayage 10 est désengagé.

Conjointement, il subsiste une communication entre les canalisations 62, 63, en sorte que, comme précédemment le frein de traînée 11 est libre.

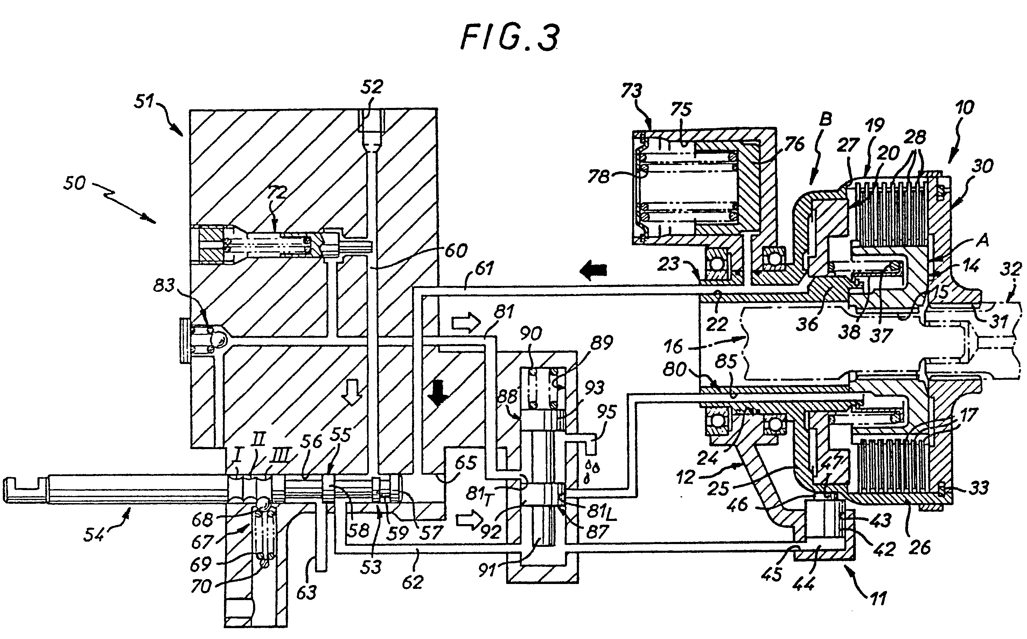

Pour la troisième position du tiroir 55 de la valve de sélection 53, figure 3, la canalisation 61 est, comme précédemment, à la décharge, en sorte que l'embrayage 10 est encore désengagé.

Mais, conjointement, la portée 58 du tiroir 55 interrompt toute communication entre les canalisations 62 et 63, cependant que par, l'évidement formant cylindre 56, la canalisation 62 se trouve en communication avec la canalisation 60 desservie par l'arrivée de fluide 52.

Autrement dit, la chambre de pression 44 du frein de traînée 11 se trouve alors sous pression, et, tandis que l'embrayage 10 est désengagé, le frein de traînée 11 se trouve serré.

Ainsi, la partie menée B de l'embrayage se trouve arrêtée en rotation.

A un embrayage 10 ainsi constitué, il est associé un circuit de lubrification et/ou refroidissement 80, également convenablement desservi par une arrivée de fluide.

Par une canalisation 81, qui est dérivée de la canalisation 60, et qui est directement sous le contrôle, d'une part, de la valve de réglage 72 précédente, et, d'autre part, d'une valve d'échappement 83 qui lui est propre, ce circuit de lubrification et/ou refroidissement 80 est desservi, dans la forme de réalisation représentée, par la même arrivée de fluide 52 que la chambre de pression 21 de l'embrayage 10 et celle 44 du frein de traînée 11.

Suivant des dispositions qui, connues en elles-mêmes, ne seront pas décrites en détail ici, il assure un conduit 85, et à une pression qui, régie par la valve d'échappement 83, est en pratique inférieure à la précédente, l'alimentation en fluide sous pression du volume interne de l'embrayage 10, de manière à ce que, notamment, les disques de friction 17 soient balayés par le fluide sous pression correspondant lors de leur serrage et de leur desserrage, avant que ce fluide sous pression ne regagne le carter de l'ensemble à la faveur des saignées 27 de la jupe 26 de la pièce formant cylindre 19.

C'est la présence d'un tel fluide dans l'embrayage 10 qui induit un couple de traînée entre la partie menante A de cet embrayage 10 et sa partie menée B necessitant normalement la mise en oeuvre d'un frein de traînée 11 pour arrêter en rotation cette partie menée B lors de la commande en désengagement de l'ensemble.

A défaut, et sans autre, la prise de force concernée commandée par l'arbre mené 32 continuerait à tourner, et il serait dès lors difficile et dangereux d'y accoupler un quelconque outil.

La position de la figure 3, embrayage 10 désengagé et frein de traînée 11 serré, suffit normalement pour permettre un tel accouplement.

Mais, en pratique, dans le cas, fréquent, où il est nécessaire de faire tourner à la main l'arbre mené 32 pour faciliter cet accouplement, c'est la position de la figure 2, embrayage 10 désengagé et frein de traînée 11 libre, qui, après intervention de celle de la figure 3 nécessaire à l'arrêt en rotation recherché, est effectivement utilisée.

En toute hypothèse, l'entraînement en rotation de l'outil concerné est ensuite assuré par passage à la position 1.

Suivant l'invention, entre l'arrivée de fluide 52 et le circuit de lubrification et/ou refroidissement 80 est interposée une valve 87, qui, dite ici par simple commodité valve de contrôle, est normalement ouverte, et qui est susceptible d'être soumise en fermeture à une pression liée à la pression d'arrivée du fluide sous pression lorsque l'embrayage 10 est désengagé.

En pratique, et tel que représenté, cette valve de contrôle 87 est soumise en fermeture à une pression liée à celle régnant dans la chambre de pression 44 du frein de traînée 11, lorsque, comme en l'espèce, un tel frein de traînée est effectivement mis en oeuvre.

Dans la forme de réalisation représentée, la valve de contrôle 87 est une valve à tiroir dont le tiroir 88, monté mobile dans un évidement formant cylindre 89 du corps creux 51, est, à l'une de ses extrémités, soumis à des moyens élastiques de rappel 90 qui le sollicitent en permanence en direction de son autre extrémité, et est soumis, à sa dite autre extrémité, à la pression régnant dans la chambre de pression 44 du frein de traînée 11.

En pratique dans cette forme de réalisation, les moyens élastiques de rappel 90 sont constitués par un ressort, qui prend appui sur l'une des extrémités de l'évidement formant cylindre 89, tandis que, par une queue 91, le tiroir 88 est propre à venir en butée sur l'autre extrémité de cet évidement formant cylindre 89.

Globalement, outre la queue 91, le tiroir 88 ne comporte en pratique que deux portées 92, 93.

La canalisation 81 desservant le circuit de lubrification et/ou refroidissement 80 traverse l'évidement formant cylindre 89, avec ses débouchés $81_T$, $81_L$ dans celui-ci susceptible d'être isolés l'un de l'autre par le tiroir 88.

Du côté du ressort 90 constituant les moyens élastiques de rappel, l'évidement formant cylindre 89 est relié à la décharge par une canalisation 95, tandis que, du côté opposé à ce ressort, ledit évidement formant cylindre 89 est traversé, sans possibilité d'une quelconque occultation, par la canalisation 62 desservant la chambre de pression 44 du frein de traînée 11.

En pratique, les débouchés $81_T$, $81_L$ de la canalisation 81 dans l'évidement formant cylindre 89 sont échelonnés axialement l'un par rapport à l'autre, et la canalisation de mise à la décharge 95 est disposée axialement de l'autre côté de celui $81_T$ de ces débouchés qui est en amont par rapport à celui $81_L$ qui est en aval, le sens de circulation pris en référence étant celui allant de l'arrivée de fluide 52 vers le circuit de lubrification et/ou refroidissement 80.

Pour sa position de repos, figures 1 et 2, pour laquelle, sous la sollicitation du ressort constituant ses moyens élastiques de rappel 90, il est en appui, par sa queue 91, sur l'extrémité correspondante de l'évidement formant cylindre 89, le tiroir 88 de la valve de contrôle 87 n'interfère pas avec la canalisation 81, et par sa portée 93, il met hors service la canalisation de mise à la décharge 95.

Il en est ainsi tant que la pression dans la canalisation 62, et donc la pression régnant dans la chambre de travail 44 du frein de traînée 11, est insuffisante pour que la force de poussée qui en résulte sur le tiroir 88 soit à même de surmonter la force antagoniste appliquée par ailleurs à celui-ci par le ressort constituant ses moyens élastiques de rappel 90.

Autrement dit, il en est ainsi tant que, la canalisation 62 le desservant étant reliée à la décharge par la canalisation 63, le frein de traînée 11 n'est pas mis en oeuvre.

Cela correspond notamment à la position de la figure 1.

Ainsi donc, lorsque l'embrayage 10 est engagé, le circuit de lubrification et/ou refroidissement 80 est effectivement en service.

Il en est de même lorsque, pour la position de la figure 2, l'embrayage 10 est désengagé et que le frein de traînée 11 est libre.

Par contre, lorsque, selon la position de la figure 3, le frein de trainée 11 est serré en vue d'un arrêt en rotation de la partie menée B de l'embrayage 10 nécessaire à la mise en oeuvre de la prise de force concernée, il résulte de la pression régnant alors dans la chambre de pression 44 de ce frein de traînée 11, qui est liée à la pression d'arrivée du fluide sous pression dans la commande hydraulique 50 puisqu'elle en est alors dérivée, l'application au tiroir 88 de la valve de contrôle 87 d'une force suffisante pour surmonter la force antagoniste appliquée à ce tiroir 88 par le ressort constituant ses moyens élastiques de rappel 90, ce ressort étant dûment taré en conséquence eu égard à la section suivant laquelle s'exerce la pression en cause.

Par suite, le tiroir 88 vient s'interposer par sa portée 92 sur la canalisation 81 desservant le circuit de lubrification et/ou refroidissement 80, en isolant l'un de l'autre ses débouchés $81_T$, $81_L$ dans l'évidement formant cylindre 89, ce qui met momentanément hors service ledit circuit de lubrification et/ou refroidissement 80.

En pratique, dans la forme de réalisation représentée, le tiroir 88 occulte alors par sa portée 92 le débouché aval $81_L$ de la canalisation 81, tout en mettant conjointement son débouché amont $81_T$ en communication avec la canalisation de mise à la décharge 95, sa portée 93 étant alors au delà du propre débouché de cette dernière.

Du fait que le circuit de lubrification et/ou refroidissement 80 n'est plus alimenté en fluide sous pression, le couple de traînée dont est l'objet la partie menée B à arrêter en rotation est avantageusement réduit, ce qui permet, du moins de se satisfaire, pour cet arrêt, d'un frein de traînée 11 simplement constitué, comme décrit, d'un piston 42 et d'un patin de freinage 46.

Par ailleurs, la mise hors service temporaire du circuit de lubrification et/ou refroidissement 80 est sans conséquence, puisqu'elle n'intervient qu'à un moment où l'embrayage 10 est désengagé.

Dans une variante de réalisation schématisée en traits interrompus à la figure 1, celle des extrémités de l'évidement du corps creux 51 formant le cylindre 89 de la valve de contrôle 87 dans laquelle intervient le ressort formant les moyens élastiques de rappel du tiroir 88 de cette valve de contrôle 87 est reliée, par une canalisation 97, à la canalisation 61 assurant, par le conduit 22, la desserte de la chambre de pression 21 de l'embrayage 10.

Ainsi, lorsque l'embrayage 10 est engagé, la pression régnant dans cette chambre de pression 21 vient s'appliquer au tiroir 88, et elle ajoute donc ses effets à ceux du ressort associé à celui-ci, ce qui assure avantageusement plus sûrement le retour en position de repos de ce tiroir 88.

Bien entendu, et tel que schématisé en traits interrompus, l'extension axiale de la portée 93 de celui-ci est alors faite suffisante pour occulter la canalisation de décharge 95 dans cette position de repos.

Dans une autre variante de réalisation également schématisée en traits interrompus à la figure 1, le piston 76 de l'accumulateur hydraulique 73 comporte un perçage calibré 98, dont il résulte avantageusement un déplacement plus lent de ce piston 76 à l'engagement de l'embrayage 10, et donc une augmentation de la durée de son intervention.

La progressivité de l'engagement de l'embrayage 10 s'en trouve améliorée.

En pratique, un clapet, non représenté, vient obturer le perçage calibré 98 après une course déterminée du piston 76, celui-ci venant par exemple buter contre un tel clapet.

Bien entendu, la présente invention ne se limite pas aux formes de réalisation décrites et représentées, mais englobe toute variante d'exécution.

En particulier, la pression à laquelle est sensible la valve de contrôle mise en oeuvre suivant l'invention, n'est pas nécessairement la pression régnant dans la chambre de pression même du frein de traînée, mais peut au contraire être aussi bien une quelconque autre pression simplement liée à la précédente.

En outre, l'arrivée de fluide desservant le circuit de lubrification et/ou refroidissement n'est pas nécessairement la même que celles desservant la chambre de pression de l'embrayage et celle du frein de traînée, mais peut au contraire être distincte de celle-ci.

## Revendications

1. Embrayage à commande hydraulique, du genre dont la commande hydraulique (50) comporte, dans un corps creux (51), pour la desserte d'au moins une chambre de pression à volume variable (21) propre à l'engagement de l'embrayage (10), une arrivée de fluide (52), propre à être raccordée à une source de fluide sous pression, en coopération avec un circuit de lubrification et/ou refroidissement (80) également desservi par une arrivée de fluide (52), caractérisé en ce que, entre le circuit de lubrification et/ou refroidissement (80) et l'arrivée de fluide (52) le desservant est interposée une valve (87), qui, dite ci-après par simple commodité valve de contrôle, est normalement ouverte, et qui est susceptible d'être soumise en fermeture à une pression liée à la pression d'arrivée du fluide sous pression lorsque l'embrayage (10) est désengagé, et en ce que, un frein de traînée (11) commandé par une chambre de pression à volume variable (44) desservie par la même arrivée de fluide (52) que l'embrayage (10) étant prévu, avec, interposée entre ladite arrivée de fluide (52) et l'une et l'autre des chambres de pression (21, 44) une valve (53) qui, dite ici par simple commodité valve de sélection, est sous le contrôle d'une commande (54) à la disposition de l'usager, ladite valve de contrôle (87) est soumise en fermeture à une pression liée à celle régnant dans la chambre de pression (44) dudit frein de traînée (11).

2. Embrayage suivant la revendication 1, caractérisé en ce que la valve de contrôle (87) est une valve à tiroir dont le tiroir (88) est, à l'une de ses extrémités, soumis à des moyens élastiques de rappel (90) qui le sollicitent en permanence en direction de son autre extrémité, et est soumis, à sa dite autre extrémité, à la pression régnant dans la chambre de pression (44) du frein de traînée.

3. Embrayage suivant la revendication 2, caractérisé en ce que, le tiroir (88) de la valve de contrôle (87) étant monté mobile dans un évidement formant cylindre (89) du corps creux (51), la canalisation (62) desservant le circuit de lubrification et/ou refroidissement (80) traverse ledit évidement formant cylindre (89), avec ses débouchés ($81_T$, $81_L$) dans celui-ci susceptibles d'être isolés l'un de l'autre par ledit tiroir (88).

4. Embrayage suivant l'une quelconque des revendications 2, 3, caractérisé en ce que, le tiroir (88) de la valve de contrôle (87) étant monté mobile dans un évidement formant cylindre (89) du corps creux (51), ledit évidement formant cylindre (89) est traversé, sans possibilité d'une quelconque occultation, par la canalisation (62) desservant la chambre de pression (44) du frein de traînée (11), du côté dudit tiroir (88) opposé à ses moyens élastiques de rappel (90).

5. Embrayage suivant l'une quelconque des revendications 1 à 4, caractérisé en ce que le frein de traînée (11) ne comporte qu'un simple piston (42), qui est monté coulissant dans un cylindre (43) en définissant avec le fond de celui-ci la chambre de pression à volume variable (44) correspondante, et qui est apte à appliquer un simple patin de freinage (46) contre une portée (47) solidaire axialement de la partie menée (B) de l'embrayage.

## Patentansprüche

1. Hydraulisch betätigte Kupplung von der Art, bei der die hydraulische Betätigung (50) für die Versorgung wenigstens einer Druckkammer mit variablem Volumen (21), die für das Einrücken der Kupplung (10) geeignet ist, einen Flüssigkeitseintritt (52) enthält, der an eine Druckflüssigkeitsquelle angeschlossen werden kann, in Zusammenwirken mit einem Schmier- und/oder Kühlkreislauf (80), der ebenfalls durch einen Flüssigkeitseintritt (52) versorgt wird, dadurch gekennzeichnet, daß zwischen dem Schmier- und/oder Kühlkreislauf (80) und dem diesen versorgenden Flüssigkeitseintritt (52) ein Ventil (87) eingeführt ist, welches nachstehend der Einfachheit halber als Regulierventil (Steuerventil) bezeichnet wird und das normalerweise offen ist und beim Schließen einem Druck ausgesetzt werden kann, der mit dem Flüssigkeitseintrittsdruck in Verbindung steht, wenn die Kupplung (10) ausgerückt ist, und daß eine Widerstandsbremse (Schleppbremse) (11) vorgesehen ist, die durch eine Druckkammer mit variablem Volumen (44) gesteuert wird, welche aus dem gleichen Flüssigkeitseintritt (52) wie die Kupplung (10) versorgt wird, wobei zwischen dem genannten Flüssigkeitseintritt (52) und der einen sowie der anderen der Druckkammern (21, 44) ein Ventil (53) eingesetzt ist, welches hier der Einfachheit halber als Ansteuerungsventil bezeichnet wird und durch eine dem Benutzer zur Verfügung stehende Steuereinheit (54) betätigt wird, wobei das genannte Regulierventil (87) beim Schließen einem Druck ausgesetzt ist, der mit dem Druck in Verbindung steht, welcher in der Druckkammer (44) der genannten Widerstandsbremse (11) vorherrscht.

2. Kupplung nach Anspruch 1, dadurch gekennzeichnet, daß das Regulierventil (87) ein Schieberventil ist, dessen Schieber (88) an einem Ende der Einwirkung elastischer Rückholmittel (90) ausgesetzt ist, die ihn in Richtung des anderen Endes permanent beanspruchen, und wobei der Schieber am genannten anderen Ende dem Druck ausgesetzt ist, der in der Druckkammer (44) der Widerstandsbremse vorherrscht.

3. Kupplung nach Anspruch 2, dadurch gekennzeichnet, daß der Schieber (88) des Regulierventils (87) beweglich in einer zylinderförmigen Aussparung (89) des Hohlkörpers (51) eingebaut ist, wobei die Leitung (62), die den Schmier- und/oder Kühlkreislauf (80) versorgt, durch die genannte zylinderförmige Aussparung (89) hindurch verläuft und wobei die darin vorhandenen Ausgänge ($81_T$, $81_L$) voneinander durch den genannten Schieber (88) getrennt werden können.

4. Kupplung nach einem der Ansprüche 2, 3, dadurch gekennzeichnet, daß der Schieber (88) des Regulierventils (87) beweglich in einer zylinderförmigen Aussparung (89) des Hohlkörpers (51) eingebaut ist und daß durch die zylinderförmige Aussparung (89) ohne jede Möglichkeit zur Unterbrechung die Leitung (62) hindurch verläuft, die die Druckkammer (44) der Widerstandsbremse (11) versorgt, und zwar auf der Seite des genannten Schiebers (88), die den elastischen Rückholmitteln (90) gegenüberliegt.

5. Kupplung nach einem der Ansprüche 1 bis 4, dadurch gekennzeichnet, daß die Widerstandsbremse (11) nur einen einfachen Kolben (42) enthält, der in einem Zylinder (43) gleitet und dabei mit dem Boden desselben die entsprechende Druckkammer mit variablem Volumen (44) begrenzt, und der geeignet ist, einen einfachen Bremsklotz (46) gegen eine Fläche (47) anzudrücken, die in axialer Richtung fest mit dem angetriebenen Teil (B) der Kupplung verbunden ist.

## Claims

1. A hydraulically controlled clutch, of the kind wherein the hydraulic control means, for acting on at least one variable volume pressure chamber (21) for effecting engagement of the clutch (10), comprises a fluid inlet (52) in a hollow body (51), the fluid inlet being adapted to be connected with a source of fluid under pressure, in cooperation with a lubricating and/or cooling circuit (80) which is itself supplied through a fluid inlet (52), characterised in that the control means includes a valve (87), hereinafter referred to for convenience as a control valve, interposed between the lubricating and/or cooling circuit (80) and the fluid inlet (52), the control valve being normally open and arranged so as to be subjected, when closed, to a pressure related to the inlet pressure of the pressurised fluid when the clutch (10) is disengaged, and in that there is provided a brake (11), controlled by a variable volume pressure chamber (44) which is supplied through the same fluid inlet (52) as the clutch (10), with a valve (53), referred to hereinafter for convenience as a selector valve, interposed between the said fluid inlet (52) and both of the pressure chambers (21, 44), the selector valve being under the control of a control device (54) operable by the person operating the clutch, the said control valve (87) being subjected, when closed, to a pressure related to that existing in the pressure chamber (44) of the said brake (11).

2. A clutch according to Claim 1, charactrised in that the control valve (87) is of a sliding type having a reciprocable valve member (88) which is provided with resilient return means (90) at one of its ends, such that the return means bias the valve member towards its other end, the valve member being subjected at its said other end to the pressure existing in the pressure chamber (44) of the brake.

3. A clutch according to Claim 2, characterised in that the valve member (88) of the control valve (87) is mounted so as to be movable in a cavity formed in the hollow body (51) and constituting a cylinder (89), with the ducting (62), which supplies the lubricating and/or cooling circuit (80), extending through the said cylindrical chamber (89) and having its ports ($81_T$, $81_L$) arranged in the latter so as to be isolated from each other by the said valve member (88).

4. A clutch according to either one of Claims 2 and 3, characterised in that the valve member (88) of the control valve (87) is movably mounted in a cylindrical chamber (89) of the hollow body (51), with the ducting (62) supplying the pressure chamber (44) of the brake (11) extending through the said cavity constituting a cylinder (89) on the side of the said valve member (44) which is opposed to the resilient return means (90) of the valve, in such a way that the ducting cannot be obturated in any way.

5. A clutch according to any one of Claims 1 to 4, characterised in that the brake (11) consists only of a simple piston (42), which is slidably mounted in a cylinder (43) so as to define with the base of the latter the corresponding variable volume pressure chamber (44), the piston being adapted to apply a simple brake element (46) against a surface (47) extending axially and fixed with respect to the driven part (B) of the clutch.

FIG.1

# FIG.2

EP 0 214 021 B1

FIG.3